(19) Europäisches Patentamt
European Patent Office
Office européen des brevets

(11) Veröffentlichungsnummer: **0 025 903**
**B1**

(12) # EUROPÄISCHE PATENTSCHRIFT

(45) Veröffentlichungstag der Patentschrift: **16.03.83**

(51) Int. Cl.³: **C 09 B 43/42**, C 09 B 29/085, D 06 P 5/00, D 06 P 1/18

(21) Anmeldenummer: **80105193.9**

(22) Anmeldetag: **01.09.80**

(54) **Monoazofarbstoffe sowie deren Herstellung und Verwendung zum Färben und Bedrucken von Fasermaterialien nach üblichen Methoden und nach dem Transferdruckprinzip sowie für den Transferdruck geeignete Drucktinten und Hilfsträger.**

(30) Priorität: **14.09.79 DE 2937329**

(43) Veröffentlichungstag der Anmeldung: **01.04.81 Patentblatt 81/13**

(45) Bekanntmachung des Hinweises auf die Patenterteilung: **16.03.83 Patentblatt 83/11**

(84) Benannte Vertragsstaaten: **BE CH DE FR GB IT LI**

(56) Entgegenhaltungen:
**FR-A-1 105 037**
**US-A-3 962 209**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Leverenz, Klaus, Dr., Heymannstrasse 44, D-5090 Leverkusen 1 (DE)**
Erfinder: **Michna, Martin, Dr., Silesiusstrasse 74, D-5000 Köln 80 (DE)**
Erfinder: **Bartmann, Ekkehard, Dr., Del Medio Park Apartments 209 2700 Del Medio Court, Montain View California 94040 (US)**
Erfinder: **Herd, Karl Josef, Dr., Buchholzstrasse 32, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 025 903 B1

# Monoazofarbstoffe sowie deren Herstellung und Verwendung zum Färben und Bedrucken von Fasermaterialien nach üblichen Methoden und nach dem Transferdruckprinzip sowie für den Transferdruck geeignete Drucktinten und Hilfsträger

Gegenstand der Erfindung sind Azofarbstoffe der Formel

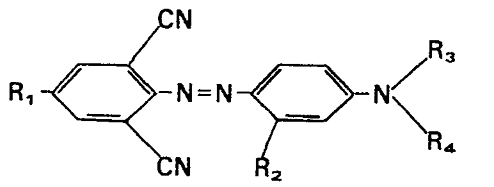

(I)

worin

$R_1$ $CH_3$, $CF_3$, $OCH_3$, $OC_2H_5$ oder Cl, Br,

$R_2$ H oder $CH^3$,

$R^3$ $CH_3$, $C_2H_5$, $C_2H_4OC_2H_5$, $C_2H_4OCH_3$, $C_3$,$H_7$, $C_4H_9$,

$R_4$ H oder $R_3$ bedeuten,

sowie deren Herstellung und Verwendung zum Färben und Bedrucken von synthetischen oder teilsynthetischen polymeren Fasermaterialien – insbesondere Polyester, insbesondere auch nach dem Wärmetransferdruckprinzip.

Bevorzugte Farbstoffe sind solche der Formel I, worin

$R_1$ $CH_3$ oder Cl oder Br,

$R_2$ H oder $CH_3$, und

$R_3$ und $R_4$ $C_2H_5$ bedeuten.

Man erhält diese Farbstoffe vorteilhafterweise durch sog. Halogen- und Cyanaustausch an entsprechenden o,o-Halogenazofarbstoffen nach an sich bekannten Methoden (vgl. z.B. US-A Nr. 3962209).

Vorzugsweise wird diese Austauschreaktion mittels CuCN, $Me_nCu(CN)_{n+1}$ oder Mischungen aus CuCN und $Zn(CN)_2$ durchgeführt.

Kupfer-(I)-cyanid und $Me_nCu(CN)_{n+1}$ kann dabei als solches oder in Form von Mischungen aus Alkalicyaniden und Kupfer-(I)-halogeniden, eingesetzt werden.

Die Umsetzung erfolgt im allgemeinen bei Temperaturen von 20-150° C, vorzugsweise in Gegenwart eines geeigneten Verdünnungsmittels, wie Wasser oder unter den Reaktionsbedingungen in Gegenwart inerter organischer Lösungsmittel.

Bevorzugt sind polare aprotische Lösungsmittel.

Ein weiterer Gegenstand der Erfindung sind Drucktinten bzw. Druckpasten für den Transferdruck, die mit derartigen Farbstoffen bedruckten bzw. imprägnierten Hilfsträger und die Substrate, die mit derartigen Farbstoffen nach dem Transferdruckprinzip gefärbt worden sind.

Das Transferdruckverfahren im allgemeinen (vgl. z.B. „Colour Index", 3. Ausgabe, Bd. 2, S. 2480) und im besonderen mit ähnlichen Farbstoffen (vgl. DE-A Nr. 2655882) ist bekannt.

Besonders geeignete Druckverfahren zur Herstellung von bedruckten Papierhilfsträgern sind der Tiefdruck und der Rotationsfilmdruck.

Geeignete Substrate sind flächenförmige Gebilde wie Vliese, Filze, Pelze, Folien und vor allem Gewebe aus synthetischen Polyamiden und insbesondere aus aromatischen Polyestern und Zellulosetriacetat sowie deren Mischungen mit Baumwolle.

Bei den letztgenannten teilsynthetischen Fasermaterialien sowie bei Fasermaterialien aus reinen Zellulosefasern, wie etwa Baumwolle, empfiehlt es sich, das Substrat vor dem eigentlichen Transferdruck mit einer die Faser hydrophobierenden reaktionsfähigen Substanz, beispielsweise mit Reaktantharzen und/oder Faserquellmitteln zu behandeln.

Nach dem beanspruchten Verfahren erhält man auf den genannten Substraten farbstarke Drucke mit guten Gebrauchsechtheiten.

Ein besonderer Vorzug der neuen Farbstoffe besteht darin, dass sie auf Grund ihrer grossen Farbstärke und ihres besonders klaren Farbtons als Alternative zu den teureren, bislang fast ausschliesslich zur Erzeugung dieses Farbtons eingesetzten Anthrachinonfarbstoffen vom Typ C.I. Disperse Red 60 in den üblichen Färbeverfahren verwendet werden können.

*Verwendungsbeispiele*

*Beispiel 1*

A) 75 g des Farbstoffs der Formel

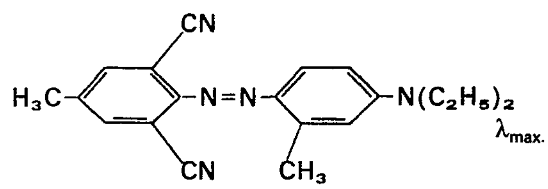

$\lambda_{max.\ 516}$

50 g eines anionischen Dispergiermittels, z.B. eines Ligninsulfonates oder eines Kondensationsproduktes aus Naphthalinsulfonsäure und Formaldehyd, und 100 ml Wasser werden vermischt und in einer Kugelmühle durch 10stündiges Mahlen in eine fein verteilte Form übergeführt.

B) Die nach A erhaltene wässerige Dispersion kann wie folgt zu einer Druckpaste verarbeitet werden:

50 bis 200 g werden mit 400 g einer 10%igen Johannisbrotkernmehlätherverdickung und 550 bis 400 ml Wasser angeteigt.

C) Mit dieser Druckpaste wird ein Papier im Tiefdruckverfahren bedruckt. Verpresst man dieses Papier während 15 bis 60 s bei 200° C mit einem Textil aus Polyesterfasern, so erhält man einen klaren roten Druck.

*Beispiel 2*

A) 50 g des Farbstoffs der Formel

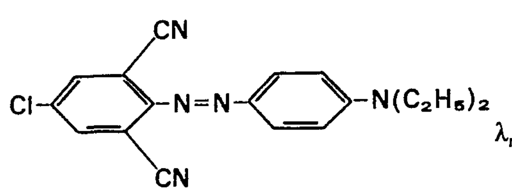

$\lambda_{max.\ 520}$

werden mit 5 bis 10 g eines Emulgatorgemisches aus äthoxyliertem Nonylphenol (4 bis 12 mol Äthylenoxid) in Wasser angeteigt. Man setzt 10 g Äthylzellulose N 4 (Hercules Powder) und 30 bis 40 Teile eines Maleinatharzes zu, das durch Kondensation von Kolophonium mit Maleinsäure hergestellt wurde. Man knetet bei 80 bis 100° C ca. 2 h und mahlt anschliessend auf einer der üblichen Mühlen. Man erhält ein feinkörniges Farbstoffpulver.

B) 200 g des nach A erhaltenen Farbstoffpulvers gibt man unter Rühren in ein Gemisch aus

730 g Äthanol,
50 g Äthylenglykol, und
20 g Äthylzellulose N 22 (Hercules Powder).

C) Mit der so erhaltenen Druckfarbe kann man im Tiefdruck Papiere bedrucken. Von diesen bedruckten Papieren kann man im Transferverfahren Textilien aus Zellulosetriacetat, z.B. Gewirke, bedrucken und erhält ebenfalls klare, rote Drucke.

*Beispiel 3*

75 g des Farbstoffs der Formel

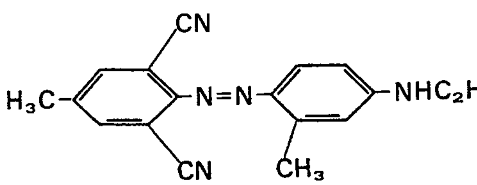

$\lambda_{max.\ 503}$

werden zusammen mit 50 g eines Kondensationsproduktes aus Naphthalinsulfonsäure und Formaldehyd und 100 g Wasser in einer Kugelmühle fein dispergiert. Die so erhaltene Farbstoffdispersion rührt man in eine Verdickung ein, die aus

21 Teilen Wasser,
7 Teilen Diacetonalkohol,
41,3 Teilen natürliches Calcium-Magnesium-Carbonat,
0,2 Teilen Natriumhexametaphosphat,
0,5 Teilen Naphthalinsulfonsäure/Formaldehyd-Kondensationsprodukt,
8 Teilen 3%igen Quellton,
12 Teilen Acrylatbinder (50%ige Lösung des Ammoniumsalzes eines Polyacrylates in 33%igem wässerigem Äthylalkohol. Das Polyacrylat ist ein Copolymerisat aus 60% Acrylsäureester, 25% Methacrylsäureäthylester, 15% Acrylsäure).

Diese Druckpaste druckt man mit Siebdruckschablonen oder mit Rundschablonen auf einen Zwischenträger, vorzugsweise Papier mit einem Quadratmetergewicht von ca. 60 bis 80 g/m² und einem $Cobb_{60}$-Wert von etwa 80. Man erhält einen glatten Druck.

Mit dem so hergestellten Papier kann man Textilien aus Polyester/Baumwolle in der Weise bedrucken, dass man das Textil mit dem Papier während 15 bis 60 s in Kontakt bringt und auf Temperaturen von 190 bis 200° C erhitzt.

Man erhält einen kräftigen roten Umdruck mit guten Gebrauchsechtheiten. Ähnliche Ergebnisse erzielt man, wenn man die in nachstehender Tabelle aufgeführten Farbstoffe verwendet.

Tabelle

| Nr. | Farbstoff | Farbton auf Polyester |
|---|---|---|
| a) | 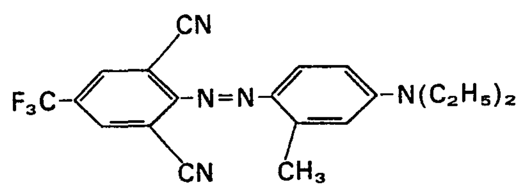 | Rot $\lambda_{max.\ 550}$ |
| b) | 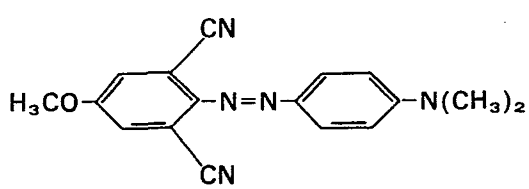 | Scharlach $\lambda_{max.\ 499}$ |
| c) | 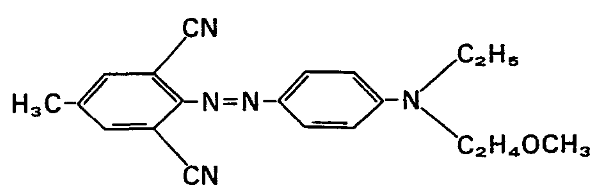 | Scharlach $\lambda_{max.\ 500}$ |

Tabelle *(Fortsetzung)*

| Nr. | Farbstoff | Farbton auf Polyester |
|---|---|---|
| d) | 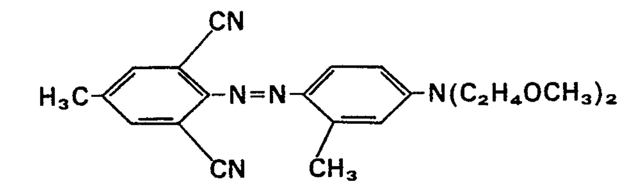 | Rot $\lambda_{max.\ 517}$ |
| e) | 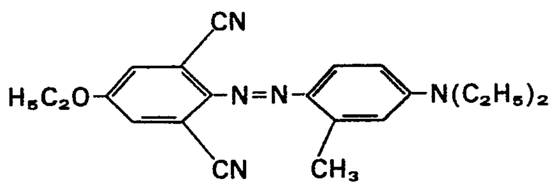 | Rot $\lambda_{max.\ 521}$ |
| f) | 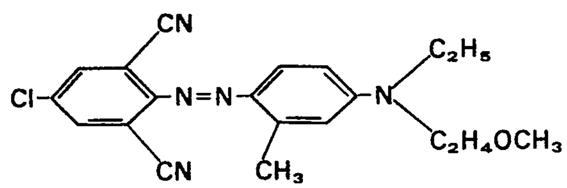 | Rot $\lambda_{max.\ 541}$ |
| g) | 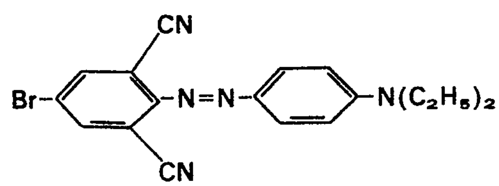 | Rot $\lambda_{max.\ 533}$ |
| h) | 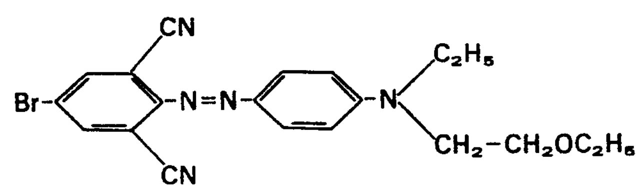 | Rot $\lambda_{max.\ 519}$ |

*Herstellungsbeispiele*

1. Der im Beispiel 1 verwendete Farbstoff wurde wie folgt hergestellt:

425 g des Azofarbstoffs der Formel

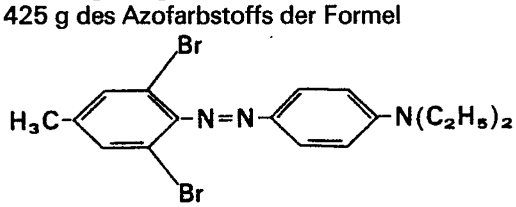

werden in 1000 ml Dimethylformamid mit 71 g Kupfer-(I)-cyanid und 77,5 g Zinkcyanid 60 min auf 80° C und danach 90 min auf 105° C erwärmt. Nach dem Abkühlen wird das Reaktionsprodukt mit 2500 ml Methanol ausgefällt. Es werden 150 g wasserfreies Eisen-(III)-chlorid eingetragen und 6 h bei Raumtemperatur gerührt. Der rote Niederschlag wird abgesaugt, erst mit Methanol, dann mit 2N-Salzsäure, schliesslich mit Wasser gewaschen und im Vakuum bei 80° C getrocknet.

2. Der im Beispiel 2 verwendete Farbstoff wurde wie folgt hergestellt:

445,5 g des Farbstoffs der Formel

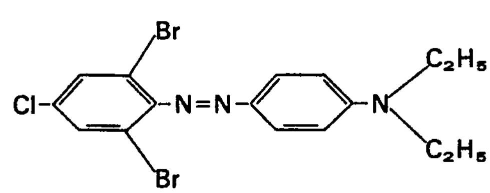

werden in 900 ml Dimethylformamid und 150 ml Pyridin mit 183 g Kupfer-(I)-cyanid 90 min auf 105° C erhitzt. Nach dem Abkühlen werden 300 ml Methanol und 150 g sublimiertes Eisen-(III)-chlorid zugefügt und 8 h bei Raumtemperatur gerührt. Danach wird der rote Farbstoff abfiltriert, nacheinander mit Methanol, 2N-Salzsäure und Wasser gewaschen und bei 80° C im Vakuum getrocknet.

In analoger Weise wurden die in den übrigen Verwendungsbeispielen genannten Farbstoffe hergestellt.

## Patentansprüche

1. Monoazofarbstoffe der Formel

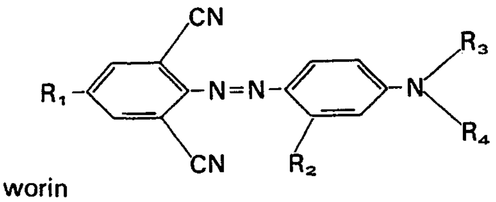

worin

$R_1$ $CH_3$, $CF_3$, $OCH_3$, $OC_2H_5$, Cl oder Br,
$R_2$ H oder $CH_3$,
$R_3$ $CH_3$, $C_2H_5$, $C_2H_4OCH_3$, $C_2H_4OC_2H_5$, $C_3H_7$ oder $C_4H_9$,
$R_4$ H oder $R_3$,
bedeuten.

2. Monoazofarbstoffe gemäss Anspruch 1, dadurch gekennzeichnet, dass
$R_1$ $CH_3$, Cl oder Br,
$R_2$ H oder $CH_3$, und
$R_3$ und $R_4$ $C_2H_5$ bedeuten.

3. Monoazofarbstoffe gemäss Anspruch 1 der Formel

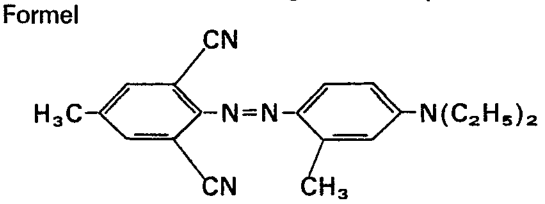

4. Verfahren zum Bedrucken von flächenförmigen Gebilden aus synthetischen oder teilsynthetischen polymeren Materialien nach dem Transferdruckprinzip, dadurch gekennzeichnet, dass man Farbstoffe gemäss Anspruch 1 verwendet.

5. Hilfsträger für den Transferdruck, dadurch gekennzeichnet, dass diese mit Farbstoffen des Anspruchs 1 bedruckt oder imprägniert sind.

6. Drucktinten und Druckpasten für den Transferdruck, dadurch gekennzeichnet, dass diese Farbstoffe des Anspruchs 1 enthalten.

7. Polyesterfasermaterialien, dadurch gekennzeichnet, dass diese mit Farbstoffen des Anspruchs 1 nach dem Transferdruckprinzip bedruckt worden sind.

8. Verwendung der Farbstoffe der Ansprüche 1 bis 3 zum Färben und Bedrucken von synthetischen und teilsynthetischen polymeren Fasermaterialien, insbesondere solche aus Polyester, Polyamid oder Zelluloseacetat.

## Revendications

1. Colorants monoazoïques de formule:

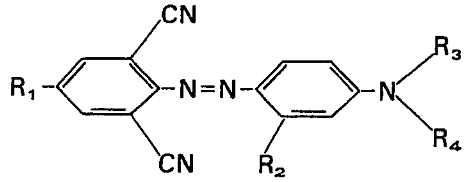

dans laquelle

$R_1$ représente $CH_3$, $CF_3$, $OCH_3$, $OC_2H_5$, Cl ou Br,
$R_2$ représente H ou $CH_3$,
$R_3$ représente $CH_3$, $C_2H_5$, $C_2H_4OCH_3$, $C_2H_4OC_2H_5$, $C_3H_7$ ou $C_4H_9$,
$R_4$ représente H ou $R_3$.

2. Colorants monoazoïques selon la revendication 1, caractérisés en ce que:
$R_1$ représente $CH_3$, Cl ou Br,
$R_2$ représente H ou $CH_3$, et
$R_3$ et $R_4$ représentent $C_2H_5$.

3. Colorants monoazoïques selon la revendication 1, de formule:

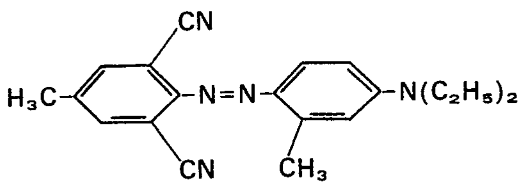

4. Procédé pour l'impression de structures planes en matières polymères synthétiques ou partiellement synthétiques selon le principe de l'impression par transfert, caractérisé en ce que l'on utilise des colorants selon la revendication 1.

5. Supports auxiliaires pour l'impression par transfert, caractérisés en ce qu'ils sont imprimés ou imprégnés avec les colorants de la revendication 1.

6. Encres et pâtes d'impression pour l'impression par transfert, caractérisées en ce qu'elles contiennent des colorants de la revendication 1.

7. Matériaux en fibres de polyester, caractérisés en ce qu'ils ont été imprimés selon le principe de l'impression par transfert avec des colorants de la revendication 1.

8. Utilisation des colorants des revendications 1 à 3 pour la teinture et l'impression de matériaux fibreux polymères synthétiques et partiellement synthétiques, en particulier à base de polyester, de polyamide ou d'acétate de cellulose.

## Claims

1. Monoazo dyestuffs of the formula

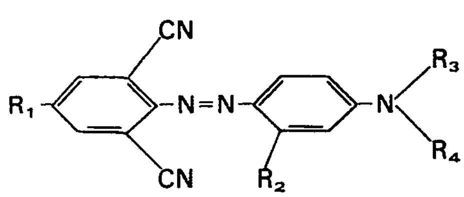

wherein

$R_1$ denotes $CH_3$, $CF_3$, $OCH_3$, $OC_2H_5$, Cl or Br,

$R_2$ denotes H or $CH_3$,

$R_3$ denotes $CH_3$, $C_2H_5$, $C_2H_4OCH_3$, $C_2H_4OC_2H_5$, $C_3H_7$ or $C_4H_9$, and

$R_4$ denotes H or $R_3$.

2. Monoazo dyestuffs according to claim 1, characterized in that

$R_1$ denotes $CH_3$, Cl or Br,

$R_2$ denotes H or $CH_3$, and

$R_3$ and $R_4$ denote $C_2H_5$.

3. Monoazo dyestuffs according to claim 1, of the formula

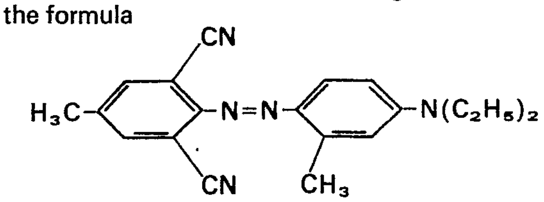

4. Process for printing sheet-like structures of synthetic or semi-synthetic polymeric materials in accordance with the principle of transfer printing, characterized in that dyestuffs according to claim 1 are used.

5. Temporary supports for transfer printing, characterized in that they are printed or impregnated with dyestuffs of claim 1.

6. Printing inks and printing pastes for transfer printing, characterized in that they contain dyestuffs of claim 1.

7. Polyester fibre materials, characterized in that they have been printed with dyestuffs of claim 1 in accordance with the principle of transfer printing.

8. Use of the dyestuffs of claims 1 to 3 for dyeing and printing synthetic and semi-synthetic polymeric fibre materials, in particular those of polyester, polyamide or cellulose acetate.